# FASCICULE DE BREVET EUROPEEN

(11) **EP 0 995 724 B1**
(45) Date de publication et mention de la délivrance du brevet: **07.03.2007**
(21) Numéro de dépôt: 99402585.6
(22) Date de dépôt: 20.10.1999
(51) Int. Cl.: C03C 17/36

(54) **Substrat transparent muni d'un empilement de couches minces**
Transparentes Substrat beschichtet mit mehrlagigen, dünnen Schichten
Multilayered thin film-coated transparent substrate

(30) Priorité: 22.10.1998 FR 9813250
(43) Date de publication de la demande: 26.04.2000
(73) Titulaire: SAINT-GOBAIN GLASS FRANCE, 92400 Courbevoie (FR)
(72) Inventeur: Rondeau, Véronique, 93700 Drancy (FR); Didier, Fabrice, 50679 Köln (DE)
(74) Mandataire: Renous Chan, Véronique

(56) Documents cités:
- EP-A- 0 678 484
- EP-A- 0 747 330
- EP-A- 0 773 197
- EP-A- 0 870 601
- EP-A- 0 908 421
- DE-A- 19 520 843

## Description

La présente invention concerne un substrat transparent, notamment en verre, muni d'un empilement de couches minces comportant au moins une couche métallique à propriétés de réflexion dans l'infrarouge notamment bas-émissive, disposée entre deux revêtements à base de matériau diélectrique.

L'application principale visée par l'invention est l'utilisation d'un tel substrat pour la fabrication de vitrages d'isolation thermique et/ou de protection solaire.

Ceux-ci sont destinés à équiper aussi bien des bâtiments que les véhicules et ce, en particulier dans le but de diminuer l'effort de climatisation et/ou réduire une surchauffe excessive entraînée par l'importance toujours croissante des surfaces vitrées dans les pièces et habitacles.

Un type d'empilement de couches minces bien connu pour conférer à un substrat transparent des propriétés thermiques, notamment de bas-émissivité, adaptée pour l'application requise précitée, consiste en une couche métallique, notamment en argent, disposée entre deux revêtements à base de matériau diélectrique du type oxyde métallique. Cet empilement est, de manière usuelle, fabriqué à partir d'une succession de dépôts effectués selon une technique utilisant le vide comme par exemple la pulvérisation cathodique, le cas échéant assistée par un champ magnétique.

Il peut être également prévu dans cet empilement une couche ayant un rôle de protection afin d'éviter la dégradation de l'argent.

Dans ce type d'empilement, la couche d'argent détermine essentiellement les performances thermiques, anti-solaires et/ou de bas-émissivité du vitrage final, tandis que les couches de matériau diélectrique agissent avant tout sur l'aspect optique du vitrage obtenu de manière interférentielle. En outre, elles ont un rôle de protection de la couche d'argent contre les agressions chimiques et/ou mécaniques.

Jusqu'à ce jour, les améliorations apportées aux vitrages munis d'empilements du type précité ont permis d'augmenter leur champ d'application, tout en leur permettant de conserver un niveau de performances thermiques et optiques satisfaisant.

Cependant, sur ce dernier point, les performances thermiques pourraient être encore améliorées, en particulier avec l'obtention d'un coefficient K d'isolation diminué.

Le but de l'invention est alors de proposer un substrat muni d'un empilement de couches minces du type précité, aux performances thermiques améliorées, sans que cela se fasse au détriment de ses performances optiques.

Pour ce faire, l'invention a pour objet un substrat transparent, notamment en verre, selon la revendication 1. Ce substrat est muni d'un empilement de couches minces comportant au moins une couche métallique à propriétés de réflexion dans l'infrarouge, notamment bas-émissive, disposée entre deux revêtements à base de matériau diélectrique, le revêtement sous-jacent comportant une couche de mouillage à base d'oxyde de zinc ZnO, éventuellement dopé à l'aluminium ZnO:AI, directement au contact de la couche métallique.

Selon l'invention, chacun des deux revêtements à base de matériau diélectrique comprend au moins une couche d'indice de réfraction élevé, de préférence supérieur ou égal à 2,2.

On précise que, dans le cadre de l'invention, un indice de réfraction élevé signifie strictement supérieur à 2.

La combinaison selon l'invention permet d'obtenir un substrat à la fois très bas-émissif et de transmission lumineuse très élevée, performances jamais atteintes selon l'état de l'art.

En outre, l'aspect colorimétrique en réflexion du substrat reste suffisamment neutre.

Pour atteindre la solution selon l'invention, les inventeurs ont tout d'abord constaté que, conformément à l'état de l'art, il était nécessaire tout d'abord d'avoir une couche métallique suffisamment épaisse pour pouvoir atteindre une valeur d'émissivité suffisamment basse et que la présence d'oxyde de zinc ZnO comme couche de mouillage directement au contact de la couche métallique permettait justement de limiter l'épaisseur de la couche métallique précitée à une valeur de l'ordre de quelques nanomètres, typiquement de l'ordre de 15 nanomètres. Ils ont su alors mettre en évidence que, malgré la limitation de l'épaisseur de la couche d'argent apportée par la présence de l'oxyde de zinc ZnO, il n'était pas aisé d'obtenir une valeur de réflexion lumineuse R_{L} basse.

Les inventeurs ont alors pensé avoir recours à l'insertion d'un seul matériau à haut indice, effet connu en soi.

D'une manière surprenante, ils se sont aperçus que l'insertion de ce type de matériau de part et d'autre de la couche métallique optimisait l'effet anti-reflets recherché. De plus, le fait que, selon l'invention, la couche à haut indice du revêtement diélectrique supérieur ne soit pas en contact direct avec le milieu ambiant, tel que l'air, permet d'avoir un meilleur aspect colorimétrique en réflexion du substrat.

La couche métallique fonctionnelle est avantageusement à base d'argent. Son épaisseur peut être choisie entre 7 et 20 nanomètres, notamment entre 9 et 15 nanomètres, quand on désire obtenir des vitrages à basse émissivité et haute transmission lumineuse (notamment une T_{L} d'au moins 70 à 80 %), particulièrement pour ceux destinés à équiper des bâtiments dans des pays froids. Quand on désire des vitrages à fonction anti-solaire, réfléchissants, destinés plutôt à équiper des bâtiments dans des pays chauds, la couche chargent peut être plus épaisse, par exemple comprise entre 20 et 25 nm (ce qui a évidemment pour conséquence d'avoir des vitrages à transmission lumineuse nettement plus faible, par exemple inférieure à 60 %).

De manière préférée, il peut être prévu que l'empilement selon l'invention, comporte une couche métallique de protection placée immédiatement au-dessus et au contact de la couche à propriétés de réflexion dans l'infrarouge.

La couche de protection prévue est avantageusement à base d'un métal unique choisi parmi le niobium Nb, le titane Ti, le chrome Cr ou le nickel Ni ou un alliage à partir à partir d'au moins deux de ces métaux, notamment d'un alliage de nickel et de chrome (Ni/Cr) et a une épaisseur géométrique inférieure ou égale à 2 nm. Selon cette variante, le métal ou l'alliage constitutif de la couche de protection peut être dopé au palladium Pd. Elle joue son rôle de couche « sacrificielle » dans le but de protéger la couche fonctionnelle en cas de dépôt de la couche suivante par pulvérisation réactive.

La couche de mouillage à base d'oxyde de zinc ZnO selon l'invention a, de préférence, une épaisseur géométrique comprise entre 5 et 40 nm, notamment entre 15 et 30 nm. Avec de telles épaisseurs, elle peut contribuer, outre sa fonction de mouillage, à ajuster l'aspect optique de l'empilement en association avec le revêtement diélectrique situé au-dessus de la couche fonctionnelle.

Avantageusement, la couche de mouillage est à base d'oxyde de zinc, au moins en partie cristallisé. Une telle couche permet de ne pas pénaliser l'empilement d'un point de vue optique en cas de traitement thermique subi par le substrat porteur tel qu'une trempe ou un bombage.

Chacune des couches à indice de réfraction élevé selon l'invention peut être avantageusement à base d'un matériau choisi parmi l'oxyde de niobium Nb₂O₅, l'oxyde de bismuth dopé au manganèse Bi₂O₃:Mn, un oxyde mixte de zinc et de titane ZnTiOₓ, l'oxyde de titane TiO₂, un oxyde mixte de tantale et de titane TiTaOₓ, un oxyde mixte de zirconium et de titane ZrTiOₓ.

Parmi ces matériaux, l'oxyde de titane TiO₂ est particulièrement préféré, notamment en raison de sa compatibilité avec les autres couches de l'empilement conforme à l'invention.

Selon une variante de l'invention, le revêtement en diélectrique au-dessus de la couche métallique réfléchissante comporte une superposition de couches, dont la couche d'indice élevé est supérieur ou égal à 2,2, et au moins une couche dont l'indice de réfraction est faible, notamment inférieur ou égal à 1,8, notamment inférieur ou égal à 1,6. Il peut s'agir par exemple d'une couche en SiO₂, SiON, SiOAI.

Selon une autre variante, le revêtement diélectrique au-dessus de la couche métallique réfléchissante peut aussi comporter, alternativement ou cumulativement avec la première variante, une superposition de couches où une couche d'indice supérieur ou égal à 2,2 est surmontée, notamment par contact direct, par une couche d'indice moyen, notamment compris entre 1,9 et 2,1. Il peut s'agir, par exemple, d'une couche en SnO₂, Si₃N₄, AIN, ZnO.

Il est clair que ces deux variantes peuvent aussi s'appliquer similairement au revêtement diélectrique sous-jacent à la couche métallique réfléchissante.

Pour obtenir une couleur en réflexion plus neutre du substrat conforme à l'invention, le revêtement à base de matériau diélectrique disposé au-dessus de la couche métallique comporte la séquence de couches déposées dans l'ordre suivant :
a) couche(s) à matériau(x) d'indice de réfraction nᵢ₋₂ d'au plus 2,2, notamment inférieur à 2,2, notamment compris entre 1,9 et 2,1 (par exemple SnO₂, Si₃N₄, AIN, ZnO) ;
b) couche(s) à matériau(x) d'indice de réfraction nᵢ₋₁ inférieur d'au moins 0,3 à celui nᵢ de la ou les dernière(s) couche(s) ; d'indice notamment inférieur à 1,8 ou 1,6 (par exemple SiO₂, SiON, SiOAl) ;
c) dernière(s) couche(s) à matériau(x) d'indice de réfraction nᵢ sensiblement égal à nᵢ₋₂ (à nouveau, notamment, en SnO₂, Si₃N₄, AlN).

Dans ce cas de figure, avantageusement, il peut y a avoir la couche d'indice élevé du type TiO2 qui se trouve disposée entre la couche métallique réfléchissante et la séquence de couches a), b), c). Les revêtements diélectriques multicouches sont avantageux, car en jouant sur les différences d'indices entre les couches, en alternant notamment des couches à haut et bas indice, on peut obtenir des propriétés d'isolation thermique excellentes qui ne sont pas obtenues au détriment des propriétés optiques. Ces revêtements multicouches permettent d'améliorer encore l'aspect en réflexion extérieure du vitrage.

Le Si₃N₄ peut être remplacé par de l'AIN ou par un nitrure mixte Si-Al.

Le substrat précédemment défini est remarquable en ce qu'il présente une émissivité ε d'au plus 0,025.

L'invention concerne également un vitrage multiple bas-émissif ou anti-solaire, notamment double vitrage, comportant le substrat décrit ci-dessus, l'empilement de couches minces étant en faces 2 et/ou 3, le cas échéant, en face 5.

L'invention concerne enfin un double vitrage bas-émissif comportant au moins un substrat précédemment défini remarquable en ce qu'il présente une transmission lumineuse T_{L} d'au moins 72 %.

Un tel double vitrage, qui comporte deux feuilles de verre, est caractérisé par un coefficient K inférieur ou égal à 1,4 W/K.m² lorsque les deux feuilles de verre sont séparées par une lame d'air ou inférieur ou égal à 1,1 W/K.m² lorsque les deux feuilles de verre sont séparées par une lame d'argon.

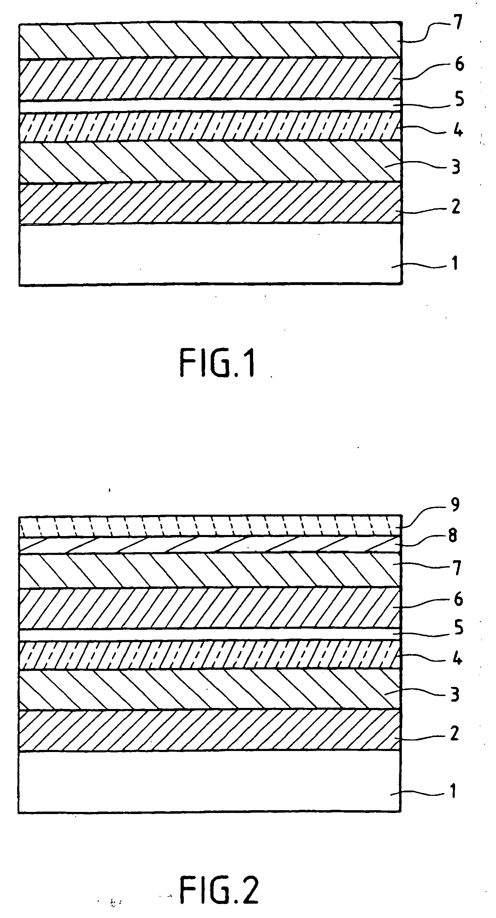

D'autres détails et caractéristiques avantageuses ressortiront ci-après à la lecture de la description détaillée des exemples suivants non limitatifs faits en référence aux figures 1 à 4.

L'exemple est réalisé conformément à l'invention.

Les exemples 1, 3 et 4 sont donnés à titre d'exemples comparatifs.

Dans tous ces exemples, les dépôts successifs des couches minces ont été réalisés à l'aide d'une technique de pulvérisation cathodique assistée par champ magnétique. Bien évidemment, dans le cadre de l'invention, ils peuvent être réalisés par toute autre technique permettant une bonne maîtrise des épaisseurs de couches obtenues.

Les substrats sur lesquels ont été déposés les empilements de couches minces sont des substrats en verre silico-sodo-calcique clair du type de ceux commercialisés par la société SAINT-GOBAIN VITRAGE sous la dénomination « PLANILUX ».

On précise que, par souci de clarté, les différentes proportions entre les épaisseurs des matériaux n'ont pas été respectées sur les figures.

### EXEMPLE 1

Sur la figure 1, on voit que le substrat 1 est surmonté respectivement d'une couche 2 à base d'oxyde de titane TiO₂, d'une couche 3 de mouillage à base d'oxyde de zinc ZnO, puis d'une couche 4 en argent, d'une couche 5 de protection en titane Ti, d'une couche 6 à base d'oxyde de titane TiO₂ surmontée d'une couche 7 d'oxyde d'étain SnO₂.

L'empilement est donc du type :
Verre/TiO₂/ZnO/Ag/Ti/TiO₂/SnO₂

Le tableau 1 ci-dessous indique l'épaisseur en nanomètres, correspondant à chaque couche de l'empilement, surmontant le substrat de 4 mm d'épaisseur.

**TABLEAU 1**

| | | |
|---|---|---|
| TiO₂ | (2) | 14 |
| ZnO | (3) | 10 |
| Ag | (4) | 15 |
| Ti | (5) | 1,2 |
| TiO₂ | (6) | 8 |
| SnO₂ | (7) | 34 |

Pour réaliser cet empilement, les conditions de dépôt pour chacune des couches préconisées ont été les suivantes :
□ les couches 2 et 6 à base de TiO2 ont été déposées à l'aide d'une cible de titane sous une pression de 3.10⁻³ mbar, dans une atmosphère de Ar/O₂ ;
□ la couche 3 à base de ZnO a été déposée à l'aide d'une cible en zinc, sous une pression de 8 x 10⁻³ mbar, dans une atmosphère d'argon/oxygène ;
□ la couche 4 en argent a été déposée à l'aide d'une cible en argent, sous une pression de 8 x 10⁻³ mbar, dans une atmosphère d'argon ;
□ la couche 5 en Ti a été déposée à l'aide d'une cible en titane, sous une pression de 8 x 10⁻³ mbar, dans une atmosphère d'argon ;
□ la couche 7 en SnO₂ a été déposée à l'aide d'une cible en étain sous une pression de 1,5 x 10⁻³ mbar, dans une atmosphère Ar/O₂.

Les puissances et vitesses de défilement du substrat onr été ajustées de manière connue en soi pour obtenir les épaisseurs désirées ci-dessus.

Le tableau 2 ci-dessous indique respectivement la valeur de transmission lumineuse T_{L} en pourcentage, la valeur de réflexion lumineuse R_{L} également en pourcentage, les valeurs a*(R) et b*(R), en réflexion dans le système de colorimétrie (L, a*, b*), sans unité, ainsi que la valeur d'émissivité ε, sans unité. Toutes ces mesures sont faites en référence à l'illuminant D₆₅.

**TABLEAU 2**

| Exemple 1 - (Substrat monolithique) | |
|---|---|
| T_{L} | 79,5 |
| R_{L} | 12,5 |
| a*(R) | 2,0 |
| b*(R) | - 11,7 |
| ε | 0,023 |

Le substrat 1 précédemment défini est ensuite monté en double vitrage avec un autre substrat de verre clair nu d'épaisseur géométrique égale à 4 mm avec une lame intercalaire d'argon de 15 mm d'épaisseur, l'empilement de couches minces étant en face 3.

Le tableau 3 ci-dessous reprend les mêmes caractéristiques T_{L}, R_{L}, a*(R), b*(R), ε ainsi que la valeur du coefficient K en W/K.m² du double vitrage.

**TABLEAU 3**

| Exemple 1 - (Double vitrage) | |
|---|---|
| T_{L} | 72,5 |
| R_{L} | 18,4 |
| a*(R) | 0,2 |
| b*(R) | - 7,5 |
| ε | 0,023 |
| K | 1,0 |

### EXEMPLE 2 - (SELON L'INVENTION)

L'empilement de couches minces représenté sur la figure 2 est identique à celui de l'exemple 1, à ceci près que la couche 7 à base d'oxyde d'étain SnO₂ a été recouverte d'une couche 8 à base de SiO₂ d'indice de réfraction égal à 1,45 et d'une dernière couche de l'empilement 9 à base de nitrure de silicium Si₃N₄.

L'empilement a donc la séquence suivante :
Verre/TiO₂/ZnO/Ag/Ti/TiO₂/SnO₂/SiO₂/Si-N₄

La couche 8 à base de SiO₂ conforme à l'invention a une épaisseur de 15 nm.

Cette couche 8 à base de SiO₂ a été déposée par pulvérisation réactive assistée par plasma dans une atmosphère d'argon/oxygène à une pression d'environ 1,5 x 10⁻³ mbar.

La couche 7 à base d'oxyde d'étain SnO₂ a une épaisseur de 25 nm. Elle a été déposée de manière identique à celle (3) de l'exemple 1.

La couche 9 à base de nitrure de silicium a une épaisseur de 10 nm et a été déposée à une pression d'environ 8.10⁻³ mbar dans une atmosphère argon/azote.

L'épaisseur de la couche 6 à base de TiO₂ est de 11 nm, les autres couches ont les mêmes épaisseurs que celles relatives à l'exemple 1.

Le tableau 4 ci-dessous indique respectivement les valeurs T_{L}, R_{L}, a*(R), b*(R), ε du substrat monolithique relatif à cet exemple.

**TABLEAU 4**

| Exemple 2 - (Monolithique) | |
|---|---|
| T_{L} | 78,6 |
| R_{L} | 14,8 |
| a*(R) | 1,3 |
| b*(R) | - 4,4 |
| ε | 0,023 |

Ce substrat est ensuite monté au double vitrage avec un autre substrat de verre clair de même épaisseur, égale à 4 mm avec une lame intercalaire d'argon de 15 mm, l'empilement suivant l'invention étant en face 3 de ce double vitrage.

Le tableau 5 ci-dessous reprend les mêmes caractéristiques T_{L}, R_{L}, a*(R), b*(R), ε ainsi que la valeur du coefficient K en W/K.m² du double vitrage.

**TABLEAU 5**

| Exemple 2 - (Double vitrage) | |
|---|---|
| T_{L} | 71,7 |
| R_{L} | 20,2 |
| a*(R) | - 0,2 |
| b*(R) | - 2,6 |
| ε | 0,023 |
| K | 1,0 |

### EXEMPLE 3 - (COMPARATIF)

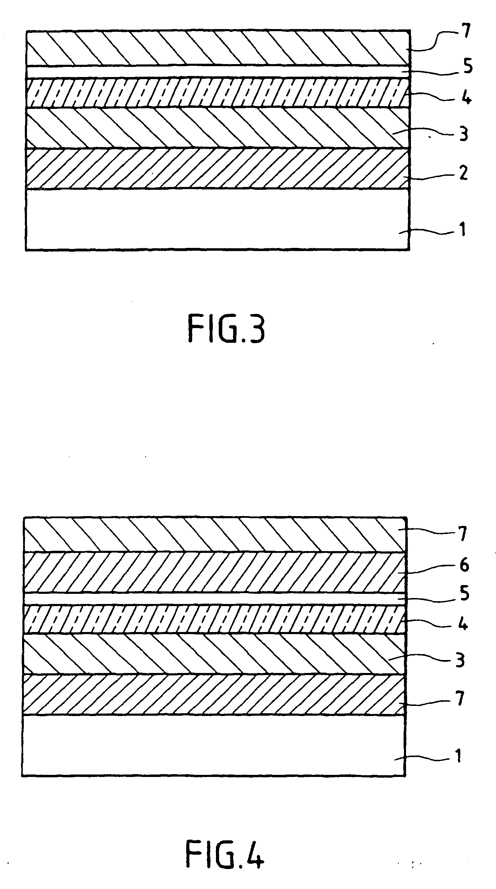

L'empilement de couches minces représenté sur la figure 3 est identique à celui de l'exemple 1, à ceci près qu'il comporte une seule couche à base de TiO₂

Cette couche est comprise dans le revêtement diélectrique sous-jacent à la couche à base d'argent Ag.

L'empilement a donc la séquence suivante :
Verre/TiO₂/ZnO/Ag/Ti/SnO₂

Le tableau 6 ci-dessous indique respectivement les valeurs T_{L}, R_{L}, a*(R), b*(R), ε du substrat monolithique relatif à cet exemple.

**TABLEAU 6**

| Exemple 3 - (Monolithique) | |
|---|---|
| T_{L} | 76,0 |
| R_{L} | 16,9 |
| a*(R) | 2,3 |
| b*(R) | - 6,4 |
| ε | 0,023 |

Ce substrat est ensuite monté au double vitrage avec un autre substrat de verre clair de même épaisseur, égale à 4 mm avec une lame intercalaire d'argon de 15 mm, l'empilement suivant l'invention étant en face 3 de ce double vitrage.

Le tableau 7 ci-dessous reprend les mêmes caractéristiques T_{L}, R_{L}, a*(R), b*(R), ε ainsi que la valeur K en W/K.m² du double vitrage.

**TABLEAU 7**

| Exemple 3 - (Double vitrage) | |
|---|---|
| T_{L} | 69,7 |
| R_{L} | 22,5 |
| a*(R) | 0,8 |
| b*(R) | - 4,8 |
| ε | 0,023 |
| K | 1,0 |

### EXEMPLE 4 - (COMPARATIF)

L'empilement de couches minces représenté sur la figure 4 est identique à celui de l'exemple 1, à ceci près qu'il comprend une seule couche à base de TiO₂ présente dans le revêtement diélectrique sur la couche d'argent Ag.

L'empilement a donc la séquence suivante :
Verre/SnO₂/ZnO/Ag/TilTiO₂/SnO₂

Le tableau 8 ci-dessous indique respectivement les valeurs T_{L}, R_{L}, a*(R), b*(R), ε du substrat monolithique relatif à cet exemple.

**TABLEAU 8**

| Exemple 4 - (Monolithique) | |
|---|---|
| T_{L} | 71,8 |
| R_{L} | 19,8 |
| a*(R) | 2,8 |
| b*(R) | - 9,2 |
| ε | 0,023 |

Ce substrat est ensuite monté au double vitrage avec un autre substrat de verre clair de même épaisseur, égale à 4 mm avec une lame intercalaire d'argon de 15 mm, l'empilement suivant l'invention étant en face 3 de ce double vitrage.

Le tableau 9 ci-dessous reprend les mêmes caractéristiques T_{L}, R_{L}, a*(R), b*(R), ε ainsi que la valeur du coefficient K en W/K.m² du double vitrage.

**TABLEAU 9**

| Exemple 4 - (Double vitrage) | |
|---|---|
| T_{L} | 66,2 |
| R_{L} | 24,9 |
| a*(R) | 1,1 |
| b*(R) | - 7,1 |
| ε | 0,023 |
| K | 1,0 |

## Revendications

1. Substrat transparent (1), notamment en verre, muni d'un empilement de couches minces comportant au moins une couche métallique (4) à propriétés de réflexion dans l'infrarouge, notamment bas-émissive, disposée entre deux revêtements à base de matériau diélectrique, le revêtement sous-jacent comportant une couche de mouillage (3) à base d'oxyde de zinc ZnO, éventuellement dopé à l'aluminium ZnO:Al, directement au contact de la couche métallique, chacun des deux revêtements à base de matériau diélectrique comprenant au moins une couche d'indice de réfraction élevé, strictement supérieur à 2 **caractérisé en ce que** le revêtement à base de matériau diélectrique disposé au-dessus de la couche métallique comporte la séquence de couches déposées dans l'ordre suivant :
a) couche(s) à matériau(x) d'indice de réfraction nᵢ₋₂ d'au plus 2,2, notamment inférieur à 2,2 ou compris entre 1,9 et 2,1 ;
b) couche(s) à matériau(x) d'indice de réfraction nᵢ₋₁ inférieur d'au moins 0,3 à celui nᵢ de la ou les dernière(s) couche(s), notamment inférieur à 1,8 ;
c) dernière(s) couche(s) à matériau(x) d'indice de réfraction nᵢ sensiblement égal à nᵢ₋₂.

2. Substrat selon la revendication 1, **caractérisé en ce que** la couche métallique à propriétés de réflexion dans l'infrarouge est à base d'argent.

3. Substrat selon la revendication 1 ou 2, **caractérisé en ce que** la couche métallique à propriétés de réflexion dans l'infrarouge a une épaisseur géométrique comprise entre 7 et 20 nanomètres, notamment entre 9 et 15 nanomètres, de manière à lui conférer des propriétés de basse-émissivité ou comprise entre 20 et 25 nanomètres de manière à lui conférer des propriétés anti-solaires.

4. Substrat selon l'une des revendications 1 à 3, **caractérisé en ce qu'**il comporte une couche métallique de protection placée immédiatement au-dessus et au contact de la couche à propriétés de réflexion dans l'infrarouge.

5. Substrat selon la revendication 4, **caractérisé en ce que** ladite couche métallique de protection est à base d'un métal unique choisi parmi le niobium Nb, le titane Ti, le chrome Cr ou le nickel Ni ou d'un alliage d'au moins deux de ces métaux, notamment d'un alliage de nickel et de chrome (Ni/Cr) **et en ce qu**'elle a de préférence une épaisseur géométrique inférieure ou égale à 2 nanomètres.

6. Substrat selon l'une des revendications précédentes, **caractérisé en ce que** la couche de mouillage a une épaisseur géométrique comprise entre 5 et 40 nanomètres, notamment entre 15 et 30 nanomètres.

7. Substrat selon l'une des revendications précédentes, **caractérisé en ce que** la couche de mouillage est à base d'oxyde de zinc, au moins en partie cristallisé.

8. Substrat selon l'une quelconque des revendications précédentes, **caractérisé en ce que** chacune des couches d'indice de réfraction élevé est à base d'un matériau choisi parmi l'oxyde de niobium Nb₂O₅, l'oxyde de bismuth dopé au manganèse Bi₂O₃:Mn, un oxyde mixte de zinc et de titane ZnTiOₓ, l'oxyde de titane TiO₂, un oxyde mixte de tantale et de titane TaTiOₓ, un oxyde mixte de zirconium et de titane ZrTiOₓ.

9. Substrat selon l'une des revendications précédentes, **caractérisé en ce que** le revêtement diélectrique au-dessus de la couche métallique réfléchissante comporte une superposition de couches, dont une couche d'indice supérieur ou égal à 2,2 et une couche dont l'indice de réfraction est inférieur ou égal à 1,8, notamment inférieur à 1,6.

10. Substrat selon la revendication 9, **caractérisé en ce que** la couche à indice inférieur ou égal à 1,8 est à base de SiO₂, SiON, ou SiOAI.

11. Substrat selon l'une des revendications précédentes, **caractérisé en ce que** le revêtement diélectrique au-dessus de la couche métallique réfléchissante comporte une superposition de couches dont une couche d'indice supérieur ou égal à 2,2 surmontée d'une couche d'indice inférieur, notamment d'indice compris entre 1,9 et 2,1, comme SnO₂, Si₃N₄, AIN, ZnO.

12. Substrat selon l'une quelconque des revendications précédentes, **caractérisé en ce que** une couche d'indice de réfraction supérieur ou égal à 2,2, du type TiO2,est disposée entre la couche métallique réfléchissante et la séquence de couches a), b), c).

13. Substrat selon l'une quelconque des revendications précédentes, **caractérisé en ce qu'**il présente une émissivité d'au plus 0,025.

14. Vitrage multiple bas-émissif ou anti-solaire, notamment double vitrage, comportant le substrat selon l'une quelconque des revendications précédentes, l'empilement de couches minces étant en faces 2 et/ou 3 et, le cas échéant, en face 5.

15. Double vitrage bas-émissif comportant au moins un substrat selon l'une quelconque des revendications 1 à 12, **caractérisé en ce qu'**il présente une transmission lumineuse T_{L} d'au moins 72 %.

16. Double vitrage selon la revendication 15 comportant deux feuilles de verre, **caractérisé en ce qu'**il présente un coefficient K inférieur ou égal à 1,4 W/K.m² lorsque les deux feuilles de verre sont séparées par une lame d'air, ou inférieur ou égal à 1,1 W/K.m² lorsque les deux feuilles de verre sont séparées par une lame d'argon.

## Claims

1. Transparent substrate (1), in particular made of glass, provided with a thin-film stack including at least one metallic layer with infrared reflection properties (4), in particular a low-emissivity layer, arranged between two dielectric-based coatings, the underlying coating having a wetting layer (3) based on zinc oxide ZnO, optionally doped with aluminium ZnO:Al, directly in contact with the metallic layer, each of the two coatings based on the dielectric material comprising at least one layer with high refractive index, strictly greater than 2, **characterized in that** the dielectric-based coating arranged above the metallic layer has the following sequence of layers deposited in this order:
a) layer(s) with material(s) with refractive index nᵢ₋₂ of at most 2.2, in particular less than 2.2 or between 1.9 and 2.1;
b) layer(s) with material(s) with refractive index nᵢ₋₁ at least 0.3 less than that nᵢ of the last layer(s), in particular less than 1.8;
c) last layer(s) with material(s) with refractive index nᵢ substantially equal to nᵢ₋₂.

2. Substrate according to Claim 1, **characterized in that** the metallic layer with infrared reflection properties is based on silver.

3. Substrate according to one of Claims 1 and 2, **characterized in that** the metallic layer with infrared reflection properties has a geometrical thickness of between 7 and 20 nanometers, in particular between 9 and 15 nanometers, so as to give it low-emissivity properties, or between 20 and 25 nanometers so as to give it solar-protection properties.

4. Substrate according to one of Claims 1 to 3, **characterized in that** it has a protective metallic layer placed immediately above and in contact with the layer with infrared reflection properties.

5. Substrate according to Claim 4, **characterized in that** the said protective metallic layer is based on a single metal selected from niobium Nb, titanium Ti, chromium Cr or nickel Ni or an alloy of at least two of these metals, in particular an alloy of nickel and chromium (Ni/Cr), and **in that** it has preferably a geometrical thickness of less than or equal to 2 nanometers.

6. Substrate according to one of the preceding claims,
**characterized in that** the wetting layer has a geometrical thickness of between 5 and 40 nanometers, in particular between 15 and 30 nanometers.

7. Substrate according to one of the preceding claims, **characterized in that** the wetting layer is based on at least partly crystallized zinc oxide.

8. Substrate according to any one of the preceding claims, **characterized in that** each of the layers with high refractive index is based on a material selected from niobium oxide Nb₂O₅, manganese-doped bismuth oxide Bi₂O₃:Mn, a mixed oxide of zinc and titanium ZnTiO_{X}, titanium oxide TiO₂, a mixed oxide of tantalum and titanium TaTiO_{X}, or a mixed oxide of zirconium and titanium ZrTiO_{X}.

9. Substrate according to one of the preceding claims, **characterized in that** the dielectric coating above the reflective metallic layer has a superposed set of layers, including a layer with index greater than or equal to 2.2 and a layer whose refractive index is less than or equal to 1.8, in particular less than 1.6.

10. Substrate according to Claim 9, **characterized in that** the layer with an index lower than or equal to 1.8 is based on SiO₂, SiON, or SiOAl.

11. Substrate according to one of the preceding claims, **characterized in that** the dielectric coating above the reflective metallic layer has a superposed set of layers, including a layer of index greater than or equal to 2.2 on top of which there is a layer with lower index, in particular with index between 1.9 and 2.1, such as SnO₂, Si₃N₄, AIN, ZnO.

12. Substrate according to any one of the preceding claims, **characterized in that** a layer with refractive index greater than or equal to 2.2, of the TiO₂ type, is arranged between the reflective metallic layer and the sequence of layers a), b), c).

13. Substrate according to any one of the preceding claims, **characterized in that** it has an emissivity of at most 0.025.

14. Low-emission or solar-protection multiple glazing, in particular double glazing, having the substrate according to any one of the preceding claims, the thin-film stack being at faces 2 and/or 3 and, where appropriate, at face 5.

15. Low-emission double glazing having at least one substrate according to any one of Claims 1 to 12, **characterized in that** it has an optical transmission T_{L} of at least 72%.

16. Double glazing according to Claim15, having two panes of glass, **characterized in that** it has a coefficient K less than or equal to 1.4 W/K.m² when the two panes of glass are separated by a layer of air, or less than or equal to 1.1 W/K.m² when the two panes of glass are separated by a layer of argon.

## Patentansprüche

1. Transparentes Substrat (1), das speziell aus Glas besteht, und welches mit einem Aufbau aus dünnen Schichten versehen ist, der mindestens eine insbesondere niedrig emittierende Metallschicht (4) mit Reflexionseigenschaften im Infrarot umfasst, die zwischen zwei Beschichtungen auf der Basis eines dielektrischen Materials angeordnet ist, wobei die darunter befindliche Beschichtung eine Haftschicht (3) auf der Basis von Zinkoxid, ZnO, das gegebenenfalls mit Aluminium dotiert ist, ZnO:Al, direkt in Berührung mit der Metallschicht umfasst und jede der zwei Beschichtungen auf der Basis eines dielektrischen Materials mindestens eine Schicht mit hohem Brechungsindex, der streng größer als 2 ist, umfasst, **dadurch gekennzeichnet, dass** die Beschichtung auf der Basis eines dielektrischen Materials, die sich auf der Metallschicht befindet, die Abfolge von in folgender Reihenfolge aufgebrachten Schichten umfasst:
a) Schicht(en) aus (einem) Material(ien) mit einem Brechungsindex nᵢ₋₂ von höchstens 2,2, insbesondere kleiner als 2,2, oder von 1,9 bis 2,1,
b) Schicht(en) aus (einem) Material(ien) mit einem Brechungsindex nᵢ₋₁, der um mindestens 0,3 kleiner als derjenige nᵢ der letzten Schicht(en) und insbesondere kleiner als 1,8 ist, und
c) letzte Schicht(en) aus (einem) Material(ien) mit einem Brechungsindex nᵢ von etwa gleich nᵢ₋₂.

2. Substrat nach Anspruch 1, **dadurch gekennzeichnet, dass** die Metallschicht mit Reflexionseigenschaften im Infrarot auf der Basis von Silber ist.

3. Substrat nach Anspruch 1 oder 2, **dadurch gekennzeichnet, dass** die geometrische Dicke der Metallschicht mit Reflexionseigenschaften im Infrarot 7 bis 20 Nanometer und insbesondere zwischen 9 und 15 Nanometer derart beträgt, dass ihr niedrig emittierende Eigenschaften verliehen werden, oder 20 bis 25 Nanometer derart beträgt, dass ihr Sonnenschutzeigenschaften verliehen werden.

4. Substrat nach einem der Ansprüche 1 bis 3, **dadurch gekennzeichnet, dass** es eine metallische Schutzschicht umfasst, die unmittelbar auf und im Kontakt mit der Schicht mit Reflexionseigenschaften im Infrarot angeordnet ist.

5. Substrat nach Anspruch 4, **dadurch gekennzeichnet, dass** die metallische Schutzschicht auf der Basis eines einzigen Metalls, das aus Niob, Nb, Titan, Ti, Chrom, Cr, bzw. Nickel, Ni, ausgewählt ist, oder einer Legierung aus mindestens zwei dieser Metalle, insbesondere einer Nickel-Chrom-Legierung (Ni/Cr), ist, und dass ihre geometrische Dicke vorzugsweise weniger als oder gleich 2 Nanometer beträgt.

6. Substrat nach einem der vorhergehenden Ansprüche, **dadurch gekennzeichnet, dass** die geometrische Dicke der Haftschicht 5 bis 40 Nanometer und insbesondere zwischen 15 und 30 Nanometer beträgt.

7. Substrat nach einem der vorhergehenden Ansprüche, **dadurch gekennzeichnet, dass** die Haftschicht auf der Basis von wenigstens teilweise kristallisiertem Zinkoxid ist.

8. Substrat nach einem der vorhergehenden Ansprüche, **dadurch gekennzeichnet, dass** jede der Schichten mit hohem Brechungsindex auf der Basis eines Materials ist, das aus Nioboxid, Nb₂O₅, mit Mangan dotiertem Wismutoxid, Bi₂O₃:Mn, einem Zink-Titan-Mischoxid, ZnTiOₓ, Titanoxid, TiO₂, einem Tantal-Titan-Mischoxid, TaTiOₓ, und einem Zirconium-Titan-Mischoxid, ZrTiOₓ, ausgewählt ist.

9. Substrat nach einem der vorhergehenden Ansprüche, **dadurch gekennzeichnet, dass** die dielektrische Beschichtung über der reflektierenden Metallschicht eine Übereinanderanordnung von Schichten umfasst, davon eine Schicht mit einem Brechungsindex von größer als oder gleich 2,2 und eine Schicht, deren Brechungsindex weniger als oder gleich 1,8 und insbesondere weniger als 1,6 beträgt.

10. Substrat nach Anspruch 9, **dadurch gekennzeichnet, dass** die Schicht mit einem Brechungsindex von kleiner als oder gleich 1,8 auf der Basis von SiO₂, SiON oder SiOAI ist.

11. Substrat nach einem der vorhergehenden Ansprüche, **dadurch gekennzeichnet, dass** die dielektrische Beschichtung über der reflektierenden Metallschicht eine Übereinanderanordnung von Schichten umfasst, davon eine Schicht mit einem Brechungsindex von größer als oder gleich 2,2, die mit einer Schicht mit einem niedrigeren Brechungsindex, insbesondere mit einem Brechungsindex von 1,9 bis 2,1, wie aus SnO₂, Si₃N₄, AIN und ZnO bedeckt ist.

12. Substrat nach einem der vorhergehenden Ansprüche, **dadurch gekennzeichnet, dass** eine Schicht vom Typ TiO₂ mit einem Brechungsindex von größer als oder gleich 2,2 zwischen der reflektierenden Metallschicht und der Abfolge von Schichten a), b) und c) angeordnet ist.

13. Substrat nach einem der vorhergehenden Ansprüche, **dadurch gekennzeichnet, dass** sein Emissionskoeffizient höchstens 0,025 beträgt.

14. Mehrscheiben-Isolierglas, insbesondere Zweischeiben-Isolierglas, das niedrig emittierend oder vor Sonne schützend ist und das Substrat nach einem der vorhergehenden Ansprüche umfasst, wobei sich der Aufbau aus dünnen Schichten auf Position 2 und/oder 3 und gegebenenfalls auf Position 5 befindet.

15. Zweischeiben-Isolierglas, das niedrig emittierend ist und wenigstens ein Substrat nach einem der Ansprüche 1 bis 12 umfasst, **dadurch gekennzeichnet, dass** sein Lichttransmissionsgrad, T_{L}, mindestens 72 % beträgt.

16. Zweischeiben-Isolierglas nach Anspruch 15, das zwei Glasscheiben umfasst, **dadurch gekennzeichnet, dass** seine Wärmedurchgangszahl k weniger als oder gleich 1,4 W/K·m², wenn die zwei Glasscheiben durch eine Luftfüllung voneinander getrennt sind, oder weniger als oder gleich 1,1 W/K·m², wenn die zwei Glasscheiben durch eine Argonfüllung voneinander getrennt sind, beträgt.
